# EUROPEAN PATENT SPECIFICATION

(11) **EP 0 432 977 B1**
(45) Date of publication and mention of the grant of the patent: **19.06.1996**
(21) Application number: 90313350.2
(22) Date of filing: 07.12.1990
(51) Int. Cl.: G11B 11/10, G11B 7/13, G11B 7/00

(54) **Optical device for detecting modulation in a light beam**
Optisches Gerät zur Detektion der Modulation eines Lichtstrahls
Appareil optique pour la détection de modulation d'un faisceau de lumière

(30) Priority: 11.12.1989 US 448450
(43) Date of publication of application: 19.06.1991
(73) Proprietor: International Business Machines Corporation, Armonk, N.Y. 10504 (US)
(72) Inventor: Tayefeh, Morovat, Tucson, Arizona 85749 (US)
(74) Representative: Burt, Roger James, Dr.

(56) References cited:
- EP-A- 0 310 795
- EP-A- 0 432 976
- DE-A- 3 821 811
- US-A- 4 858 218
- US-A- 5 034 934
- US-A- 5 062 091
- PATENT ABSTRACTS OF JAPAN vol. 8, no. 282 (P-323)(1719) 22 December 1984 & JP-A-59 148 145

## Description

The present invention relates to optical devices, for detecting both polarisation modulation and intensity modulation in a light beam.

Many magneto-optic data recording discs, of the so-called hard-sectored type, usually include moulded surface perturbations for indicating the sector boundaries. These surface perturbations also indicate sector addresses and other control information. Such surface perturbations are used to modulate the intensity of a laser beam that impinges on the perturbations for providing a detectable readback signal.

In the data bearing portions of a magneto-optic (MO) disk, the surfaces are smooth, yielding a constant intensity reflected light and readback signal when a laser beam impinges on these portions. The information recorded in the MO data bearing portions is represented by remanent magnetisation of either a first or a second polarity at the reading and recording surface. As is well known, a light beam reflected by such a magneto-optic data bearing layer experiences a rotation of the linear polarisation in accordance with the remanent magnetisation, creating p and s polarisation components. The components are separated in a readback optical system, such that the p component impinges upon a first photodiode, while the s component impinges upon a second photodiode. The difference in signal between the two photodiodes is representative of the recorded data.

It is desirable to use only one circuit to read the signals corresponding to both the intensity modulation and the MO modulation of the light beams. In many differential detection circuits the intensity of the signal received by one diode can be made equal to the intensity of the signal received by the other diode, such that the differential signal is zero. Therefore, intensity modulation cannot be readily and reliably detected. In a similar vein, if there is intensity modulation of an MO signal, detection also becomes more difficult.

US-A-4 858 218 discloses a circuit in which an MO signal is generated as a polarisation modulation signal from the difference of the detected p and s components , while an intensity modulated signal is generated from the sum of both of the signals.

EP 0 304 560 discloses two photodiodes connected in cascade with the anode of one diode connected to the cathode of the second diode. An output signal is taken from the anode-cathode connection. The photodiode connection inherently removes common mode noise and reduces electrical noise by 3 db (only one output amplifier is used rather than two to reduce circuit noise by two).

EP-A-0 310 795 discloses a single circuit which reads the signals corresponding to both the intensity modulation and the MO modulation of the light beams. The circuit uses two photodetectors which are connected to separate subtracting and adding circuits with two separate amplifiers connected between each of the photodetectors and respective inputs of the subtracting and adding circuits.

The use of a circuit for subtracting one of the signals from the other of the signals however generates electrical noise, due to the two input circuits being used. In addition, any mismatch in the gains of the input amplifiers reduces the Common Mode Rejection Ratio (CMRR). Because of the significant amount of common mode noise present in optical drives, such as laser and media noise, it is desirable that a high Common Mode Rejection Ratio be achieved. In addition, the matching of high gain, wide band circuits is difficult and costly to achieve.

The object of the present invention is to provide an improved optical detection circuit for detecting both polarisation modulation and intensity modulation in a light beam, the circuit having lower electrical noise and higher CMRR.

The present invention relates to an optical detection circuit for detecting signals representing both polarisation modulation and intensity modulation in a received light beam. According to the invention the circuit comprises means for splitting the beam into two components each of which is polarised with a respective one of two forms of polarisation, two photodiodes, each one adapted to detect the polarisation modulation in a respective one of the component beams, differential detection circuit for comparing the detection signals representing the two forms of polarisation to generate a polarisation modulation signal and output means for outputting one of the detection signals as an intensity modulation signal and is characterised in that the photodiodes are electrically connected in series, an amplifier being connected to their connecting point, and the photo-diode which detects one of the forms of polarisation is selectively inhibited so that the output of the amplifier is converted from a polarisation modulation signal into an intensity modulation signal.

In order that the invention may be more readily understood an embodiment will now be described with reference to the accompanying drawings in which:-
Figure 1 is a simplified schematic diagram illustrating an optical detection circuit in accordance with the invention, and
Figure 2 is a simplified circuit diagram showing one embodiment of an electronic switch used in the circuit illustrated in Figure 1.

Referring now more particularly to the drawing, like numbers indicate like parts and structural features in the two figures.

A magneto-optic data recording and storage disk 10 can be suitably rotated and is scanned by a laser beam supplied b a diode laser 11. Diode laser 11 is energised in the usual manner, such energisation is not shown for purposes of simplicity. The laser 11 b am 12 passes through polarisation beam splitter 13, is thence refracte by optical plate 14 to be reflected by mirror 15 through objective lens 6, and thence passes along light path 17 to a data recording and storing track on magneto-optic disk 10. Disk 10 reflects the light beam and rotates the polarisation of the light beam in accordance with the remanent magnetisation of the magneto-optic disk. This phenomenon is well known and not described for that reason. The reflected light goes back through the mirror 15, and is reflected in splitter 13 so as to follow optical path 20 to a second beam splitter 21. Beam splitter 21, splits the beam on path 20 into two equal intensity portions by half a mirror 23 and an optical mirror 24 respectively and the two beam portions travel along paths 22 and 25 respectively. Polarisation filters 30 and 31 respectively filter or allow to pass only the s and p components in paths 25 and 22. A pair of photodiodes 32, 33 are connected in series between a +V signal and ground reference potential. The light beams on paths 25 and 22, impinge on photodiodes 32 and 33 respectively. This described arrangement is known to provide differential detection of the signals representing the s and p components by taking a signal over line 35 to a suitable preamplifier 34. The output of amplifier 34 goes to terminal 36 from which an electrical signal is taken for data detection, as is known in the art.

An electronic switch 40 is interposed between the anode of diode 33 and ground reference potential. When switch 40 is closed, then an electric circuit is completed between line 35 through reverse biassed diode 33 to ground reference potential. In this mode, diode 33 contributes to the differential signal on line 35, such that the illustrated circuit is effective to detect polarisation rotations in the light beam received over path 20. For detecting an intensity-modulated beam, electric switch 40 is opened for disconnecting photodiode 33 from the circuit so that only diode 32 is effective to detect signals. The intensity-modulated signal going along path 22 is wasted, while the other half of the intensity-modulated signal goes along path 25 to impinge on diode 32 for detection of the intensity-modulated beam. The detected intensity modulation of the beam is passed by data diode 32 through preamplifier 34 for detection by detection circuits, as indicated by numeral 36.

The arrangement described can be used in detecting data recorded hard-sectored magneto-optic data recording disc 10. Hard-sectoring is usually provided by moulding surface undulations to identify the sector boundaries and leaving the space between the undulating surface sector marks for recording data signals in the magneto-optic disc 10. Numeral 43 illustrates a track from storage disc 10. Hard-sector areas include embossed sector marks, track and sector identification, called an ID field 44 which includes the hard-sectored areas, with interposed magneto-optic smooth surface data recording areas 45. Optical disk controller (ODC) 42 decodes the signals read from each ID field 44 or MO area 45 for setting switch 40 to the position for detecting signals from the next encountered zone, i.e., MO polarisation modulated signals or intensity-modulated signals representing surface modulation. ODC 42 is a usual controller found in optical disk devices.

ODC 42 supplies a switch-closing signal over line 46 for closing electronic switch 40 for enabling detection of a polarisation-modulated light beam reflected from areas 45. In a similar manner, when ID fields 44 are being scanned, ODC 42 supplies a switch-opening signal over line 46 for enabling detecting the intensity modulation caused by the surface undulations of the ID field 44.

The arrangement described can also be used for defect detection, which results in intensity modulation of the reflected light beam. A defect will reflect a low-intensity light beam, while a good area of the surface will reflect a high-intensity light beam so as to intensity modulate an impinging light beam. A signal travelling over line 41 opens switch 40 for enabling defect detection, such as used for surface analysis of storage member 10. Also, defect detecting can be achieved during erase cycles for MO field 45, such as shown in United States Patent 4,941,139.

While electronic switch 40 is shown for deactivating the diode 33, alternatively electronic shutters may be imposed in the light paths 22 or 25 for blocking the light from reaching one or both of the photodiodes. Such electronic shutters will operate as quickly a the electronic switch 40.

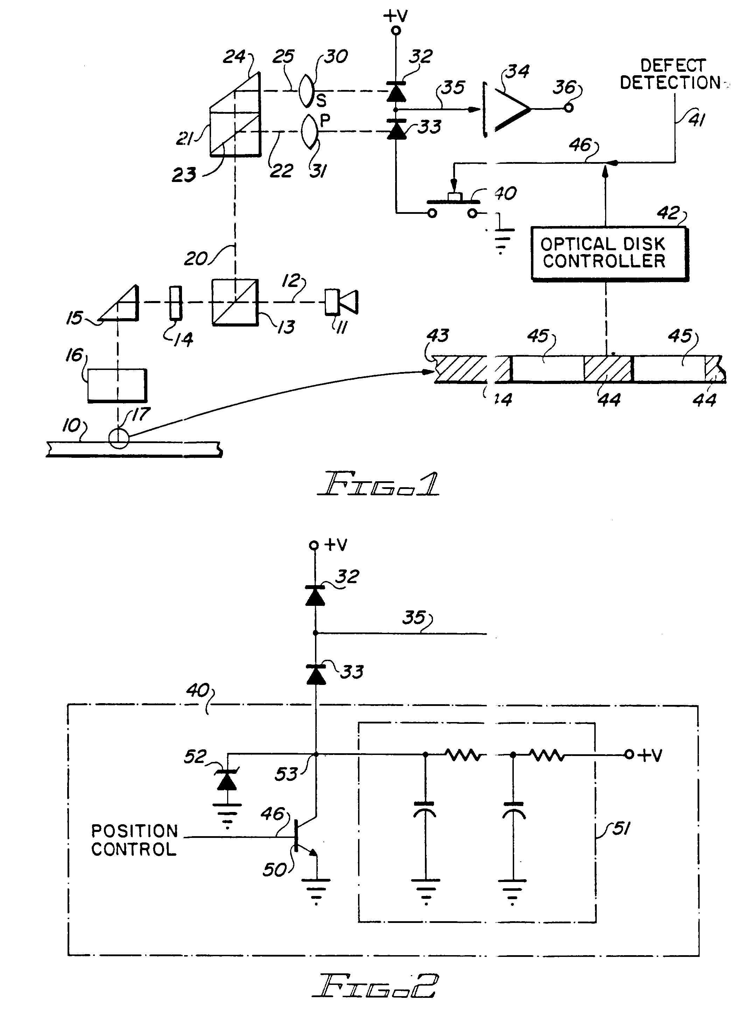

Figure 2 shows one embodiment of electronic switch 40 connected to the anode of a photodiode 33. An NPN transistor 50 has its base electrode is connected to line 46, its emitter electrode is connected to ground reference potential, and its collector is connect d to the anode of photodiode 33. A Zener diode 52 may be inserted a shown for limiting the positive voltage excursions at the junction 53 between the collector of NPN transistor 50 and the anode of photodiode 33. A positive voltage source is connected through a low-pass filter 51 to junction 53.

## Claims

1. An optical detection circuit for detecting signals representing both polarisation modulation and intensity modulation in a received light beam, the circuit comprising:
means for splitting said beam into two components (22,25) each of which is polarised with a respective one of two forms of polarisation;
two photodiodes (32,33), each one adapted to detect the polarisation modulation in a respective one of said component beams;
differential detection circuit (32,33,34,35) for comparing the detection signals representing said two forms of polarisation to generate a polarisation modulation signal; and
output means for outputting one of the detection signals as an intensity modulation signal;
characterised in that:
the photodiodes are electrically connected in series, an amplifier (34) being connected to their connecting point; and
the photo-diode which detects one of said forms of polarisation is selectively inhibited so that the output of the amplifier is converted from a polarisation modulation signal into an intensity modulation signal.

2. An optical detection circuit as claimed in claim 1 wherein said selective inhibition of the photo-diode is controlled by a signal (46) indicating that the portion of said light beam being received is intensity modulated.

3. An optical detection circuit as claimed in claim 1 wherein said selective inhibition is achieved by means of an lectronic switch (40), connecting one of the photo-diode to the power supply.

4. An optical detection circuit as claimed in claim 1 wherein said selective inhibition is achieved by means of interrupting one of said component beams.

5. A magneto-optic data recording and storage device comprising:
a magneto-optic data recording and storage medium;
means for directing a beam of light onto the surface of said medium so as to generate a reflected beam of light which is polarisation modulated according to the data recorded in said medium and is intensity modulated in accordance with undulations on the surface of said medium; and
an optical detection circuit as claimed in any one of the preceding claims for detecting polarisation modulation and intensity modulation in said reflected beam of light.

## Patentansprüche

1. Ein optischer Detektionsschaltkreis zum Detektieren von Signalen in einem empfangenen Lichtstrahl, die sowohl eine Polarisatinsmodulation als auch eine Intensitätsmodulation repräsentieren, wobei der Schaltkreis aufweist:
Mittel zum Teilen des Lichtstrahls in zwei Komponenten (22, 25), von denen jede mit jeweils einer von zwei Arten der Polarisation polar siert ist,
zwei Photodioden (32, 33), von denen eweils eine angepaßt ist, um die Polarisationsmodulation in jeweils einem der Strahl komponenten zu detektieren,
ein Differential-Detektionsschaltkrei (32, 33, 34, 35) zum Vergleichen der Detektionssignale welche die beiden Arten der Polarisation repräsentieren, um ein Polarisationsmodulationssignal zu generieren, und
Ausgangsmittel zum Ausgeben eines der Detektionssignale als ein Intensitätsmodulationssignal,
gekennzeichnet dadurch, daß
die Photodioden elektrisch in Serie geschaltet sind, wobei ein Verstärker (34) an ihren Verbindungspunkt angeschlossen ist, und
die Photodiode, die eine der Arten der Polarisation detektiert, selektiv blockiert ist, so daß die Ausgabe des Verstärkers von einem Polarisations-Modulationssignal in ein Intensitäts-Modulationssignal umgewandelt wird.

2. Ein optischer Detektionsschaltkreis w e im Patentanspruch 1 beansprucht, wobei
die selektive Blockierung der Photodiode durch ein Signal (46) gesteuert wird, welches anzeigt, daß der Teil des Lichtstrahls, der empfangen wird, intensitätsmoduliert ist.

3. Ein optischer Detektionsschaltkreis wie im Patentanspruch 1 beansprucht, wobei
die selektive Blockierung durch Mitte eines elektronischen Schalters (40) erreicht wird, der eine der Photodioden mit der Spannungsversorgung verbindet.

4. Ein optischer Detektionsschaltkreis wie im Patentanspruch 1 beansprucht, wobei
die selektive Blockierung durch Mitte zum Unterbrechen einer der Strahlkomponenten erreicht wird.

5. Eine magneto-optische Daten-Aufzeichnungs- und Speicher-Vorrichtung aufweisend:
ein magneto-optisches Daten-Aufzeichnungs- und Speicher-Medium,
Mittel zum Richten eines Lichtstrahls auf eine Oberfläche des Mediums derart, daß ein reflektierter Lichtstrahl erzeugt wird, der polarisationsmoduliert ist entsprechend den Daten, die in dem Medium gespeichert sind, und der intensitätsmoduliert ist in Übereinstimmung mit Welligkeiten der Oberfläche des Mediums, und
ein optischer Detektionsschaltkreis, wie er in einem der vorangegangenen Patentansprüche beansprucht ist, zum Detektieren von Polarisationsmodulation und Intensitätsmodulation in dem reflektierten Lichtstrahl.

## Revendications

1. Circuit de détection optique destiné à détecter les signaux représentant à la fois une modulation de polarisation et une modulation d'intensité dans un faisceau de lumière reçu, le circuit comprenant :
un moyen destiné à séparer ledit faisceau en deux composantes (22, 25), chacune d'entre elle étant polarisée selon une forme respective de deux formes de polarisation,
deux photodiodes (32, 33) chacune étant adaptée pour détecter la modulation de polarisation dans un faisceau respectif desdits faisceaux de composante,
un circuit de détection différentiel (32, 33, 34, 35) destiné à comparer les signaux de détection représentant lesdites deux formes de polarisation pour générer un signal de modulation de polarisation, et
un moyen de sortie destiné à sortir l'un des signaux de détection en tant que signal de modulation d'intensité,
caractérisé en ce que :
les photodiodes sont reliées électriquement en série, un amplificateur (34) étant relié à leur point de liaison, et
la photodiode qui détecte l'une desdites formes de polarisation est inhibée sélectivement de sorte que la sortie de l'amplificateur est convertie d'un signal de modulation de polarisation en un signal de modulation d'intensité.

2. Circuit de détection optique selon la revendication 1 dans lequel ladite inhibition sélective de la photodiode est commandée par un signal (46) indiquant que la partie dudit faisceau de lumière qui est reçu, est modulée en intensité.

3. Circuit de détection optique selon la revendication 1 dans lequel ladite inhibition sélective est obtenue au moyen d'un commutateur électronique (40), reliant l'une des photodiodes à l'alimentation électrique.

4. Circuit de détection optique selon la revendication 1 dans lequel ladite inhibition sélective est obtenue au moyen de l'interruption de l'un desdits faisceaux de composante.

5. Dispositif d'enregistrement et de mémorisation de données magnéto-optique comprenant :
un support d'enregistrement et de mémorisation de données magnéto-optiques,
un moyen destiné à diriger un faisceau de lumière sur la surface dudit support de façon à générer un faisceau de lumière réfléchi qui est modulé en polarisation conformément aux données enregistrées dans ledit support et qui est modulé en intensité conformément aux ondulations de la surface dudit support, et
un circuit de détection optique, selon l'une quelconque des revendications précédentes, destiné à détecter la modulation de polarisation et la modulation d'intensité dans ledit faisceau de lumière réfléchi.
